# EUROPEAN PATENT APPLICATION

(11) **EP 4 797 382 A1**
(43) Date of publication of application: **26.08.2026**
(21) Application number: 25226896.6
(22) Date of filing: 23.12.2025
(51) Int. Cl.: H01M 10/613, H01M 10/643, H01M 10/6552, H01M 10/6554, H01M 10/6556, H01M 10/6562, H01M 50/103, H01M 50/112, H01M 50/133, H01M 50/209, H01M 50/264, H01M 50/548, H01M 50/271

(54) **BATTERY CELL AND BATTERY PACK FORMED BY ASSEMBLING THE BATTERY CELLS**

(30) Priority: 20.02.2025 JP 2025025889
(71) Applicant: Prime Planet Energy & Solutions, Inc., Chuo-ku, Tokyo 103-0022 (JP)
(72) Inventor: UCHIDA, Yozo, Tokyo,, 103-0022 (JP)
(74) Representative: Kuhnen & Wacker Patent- und Rechtsanwaltsbüro PartG mbB

(57) **Abstract**

A battery cell (10, 10B, 10C, 10D, 10E, 10F) that forms a secondary battery (ND) includes an electrode body (2), and a battery can (1, 1B, 1C, 1D, 1E, 1F) made of metal and having an extruded can (11, 11B, 11C, 11D, 11E, 11F) in the form of a quadrangular tube which contains the electrode body (2) and is open at opposite ends in an axial direction (Z), and lids (12) that seal the opposite ends of the extruded can (11, 11B, 11C, 11D, 11E, 11F). The extruded can (11, 11B, 11C, 11D, 11E, 11F) includes a pair of long side portions (111) extending in the axial direction, and an upper short side portion (112a) and a lower short side portion (112b) perpendicular to the long side portions (111). The lower short side portion (112b) has a larger thickness than the upper short side portion (112a).

## Description

### BACKGROUND

### Technical Field

The disclosure relates to battery cells that form a secondary battery used as a drive source for hybrid vehicles, electric vehicles, etc., and also relates to a battery pack formed by assembling the battery cells.

### Related Art

In general, secondary batteries used as drive sources for hybrid vehicles, electric vehicles, etc. are required to pass high currents at high voltages. Therefore, large battery cells or battery packs formed by assembling multiple battery cells are used. Since a large battery cell generates significant heat, it is usually cooled with a cooling plate, or the like, held in contact with the bottom surface portion of the battery cell. Meanwhile, one example of the battery pack, in which prismatic battery cells are stacked in a vertical arrangement, includes a restraint mechanism that applies pressure to the outermost battery cells inward in the stacking direction to hold the cells in place. The restraint mechanism is equipped with a cooling plate, or the like, which contacts with the bottom surface portions of the battery cells and serves to cool each of the battery cells (see, for example, Japanese unexamined patent application publication No. 2022-866 (JP 2022-866 A)).

### Patent Documents

Patent Document 1: Japanese unexamined patent application publication No. 2022-866 (JP 2022-866 A)

### SUMMARY

### Technical Problems

However, when the pressure inside a case rises due to a rise in the temperature of the battery cell during rapid charging of the battery cell, for example, the bottom surface portion of the battery cell bulges downward in an arc shape, and the contact area between the bottom surface portion of the battery cell and the cooling plate or the like is reduced, resulting in a reduction in the cooling performance of the battery cell. When the electrode body expands in volume as the battery cell ages and deteriorates, too, the bottom surface portion of the battery cell bulges downward in an arc shape, and the contact area between the bottom surface portion of the battery cell and the cooling plate or the like is reduced, resulting in a reduction in the cooling performance of the battery cell.

The disclosure was made in the light of the above problem, and provides a battery cell that can suppress reduction of the cooling performance with a simple structure, and a battery pack formed by assembling the battery cells.

### Means of Solving the Problems

(1) One aspect of the disclosure for solving the above problem is a battery cell that forms a secondary battery and includes an electrode body, and a battery can made of metal and having an extruded can in the form of a quadrangular tube which contains the electrode body and is open at opposite ends in an axial direction, and lids that seal the opposite ends of the extruded can. In the battery cell, the extruded can includes a pair of long side portions extending in the axial direction, and an upper short side portion and a lower short side portion perpendicular to the long side portions, and the lower short side portion has a larger thickness than the upper short side portion.
(2) In the battery cell described in (1) above, the lower short side portion may have opposite end portions in a width direction in which grooves are formed along the axial direction, and the grooves may be recessed inward in the width direction while leaving flange portions below.
(3) In the battery cell described in (1) above, the lower short side portion may have opposite end portions in a width direction in which flange portions that protrude outward in the width direction are formed along the axial direction.
(4) In the battery cell described in any one of (1) to (3) above, the extruded can may include a partition wall portion that extends in the axial direction between the lower short side portion and a lower end portion of the electrode body, to connect the long side portions or the long side portion and the lower short side portion, and the extruded can may have a coolant flow path formed between the partition wall portion and the long side portions and the lower short side portion.
(5) Another aspect of the disclosure for solving the above problem is a battery pack including a plurality of the battery cells described in (2) or (3) above, which are stacked with intervening members interposed between the long side portions, and a restraint mechanism that applies pressure to the outermost ones of the battery cells inward in a stacking direction to hold the battery cells in place. The restraint mechanism includes a cooling portion that cools the battery cells, and a pressing portion that presses the lower short side portions against the cooling portion via the flange portions.

### BRIEF DESCRIPTION OF THE DRAWINGS

FIG. 1 is a side view of a battery cell according to one embodiment;
FIG. 2 is a schematic A-A cross-sectional view as seen in the direction of arrows A shown in FIG. 1;
FIG. 3 is a schematic cross-sectional view of a battery pack formed by assembling a plurality of the battery cells shown in FIG. 1;
FIG. 4 is a schematic A-A cross-sectional view of a first modified example of the battery cell shown in FIG. 1;
FIG. 5 is a schematic A-A cross-sectional view of a second modified example of the battery cell shown in FIG. 1;
FIG. 6 is a schematic A-A cross-sectional view of a third modified example of the battery cell shown in FIG. 1;
FIG. 7 is a schematic A-A cross-sectional view of a fourth modified example of the battery cell shown in FIG. 1; and
FIG. 8 is a schematic A-A cross-sectional view of a fifth modified example of the battery cell shown in FIG. 1.

### DETAILED DESCRIPTION OF THE EXEMPLARY EMBODIMENTS

### Detailed Description of Battery Cell

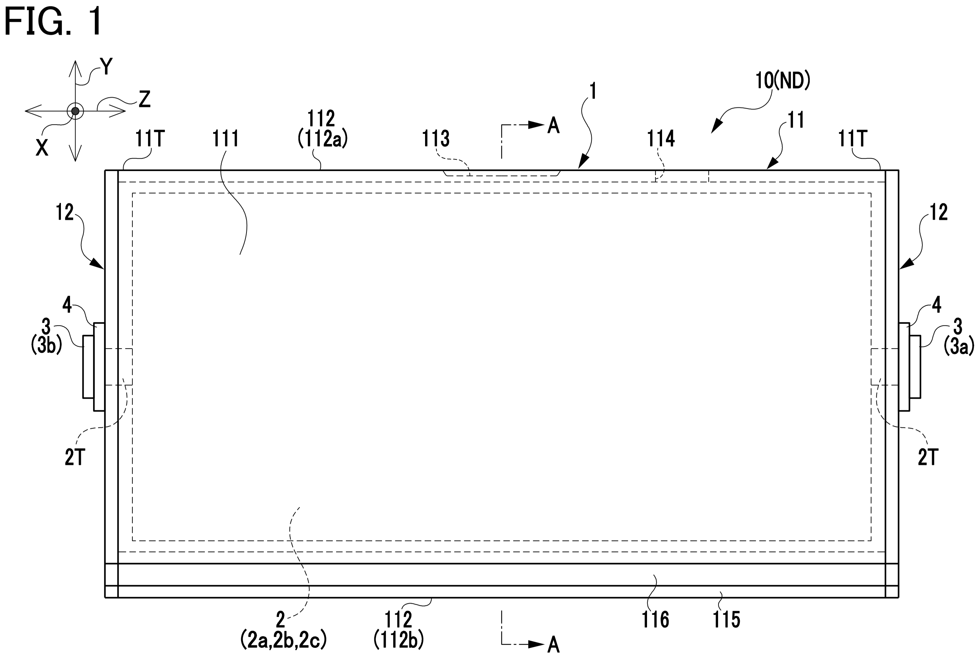

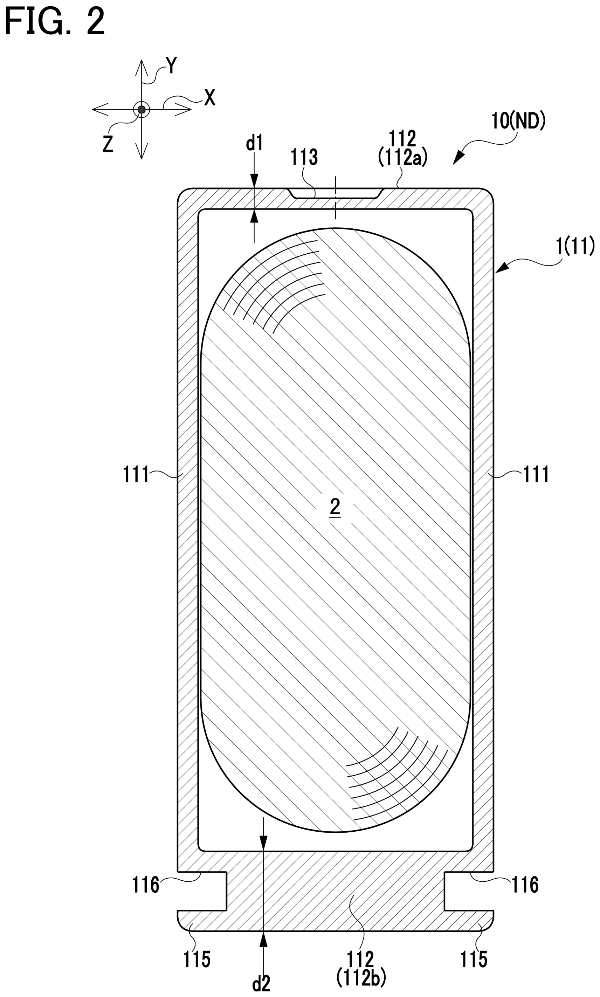

Next, a battery cell according to one embodiment of the disclosure will be described in detail with reference to the drawings. FIG. 1 is a side view of the battery cell according to the embodiment. FIG. 2 is a schematic A-A cross-sectional view of the battery cell shown in FIG. 1. In FIG. 1 to FIG. 8, the X direction indicates the width direction of short side portions (an upper short side portion, a lower short side portion) of an extruded can, the Y direction indicates the width direction of long side portions of the extruded can, and the Z direction indicates the axial direction of the extruded can. The X direction is also the stacking direction of the battery cells in a battery pack. The Y direction is also the vertical direction of the battery cell. The Z direction is also the longitudinal direction of an electrode body.

As shown in FIG. 1 and FIG. 2, the battery cell 10 according to the one embodiment of the disclosure that forms a secondary battery ND includes an electrode body 2, and a battery can 1 made of metal and having a quadrangular tube-like extruded can 11 that contains the electrode body 2 and has opposite end portions 11T that are open in the axial direction (the Z direction), and lids 12 that seal the opposite end portions 11T of the extruded can 11.

The electrode body 2 includes a strip-shaped positive electrode foil 2a, a strip-shaped negative electrode foil 2b, and a strip-shaped separator 2c sandwiched between the electrode foils 2a, 2b. The electrode foils 2a, 2b and the separator 2c are wound into a flat shape and laminated to form the electrode body 2. However, the electrode body 2 is not necessarily limited to this type. For example, the electrode body may be formed by laminating multiple sheets of positive electrode foils, multiple sheets of negative electrode foils, and multiple sheets of separators sandwiched between the positive and negative electrode foils. An insulating film (not shown) is interposed between the electrode body 2 and the battery can 1 and serves to prevent the electrode body 2 and the battery can 1 from short-circuiting. For example, polypropylene (PP) resin may be used for the insulating film.

The battery cell 10 that forms the secondary battery ND may be, for example, a lithium-ion secondary battery. In this case, an aluminum foil, for example, may be used as the positive electrode foil 2a, and a lithium transition metal oxide (e.g., LiNi_{1/3}Co_{1/3}Mn_{1/3}O₂, and LiNiO₂), for example, may be used as an active material adhered to the positive electrode foil 2a. Meanwhile, a copper foil, for example, may be used as the negative electrode foil 2b, and graphite, hard carbon, soft carbon, etc. may be used as an active material adhered to the negative electrode foil 2b. A porous sheet of polypropylene or polyethylene, for example, may be used as the separator 2c.

The extruded can 11 is a quadrangular tube having a rectangular cross section, and has a pair of large-width long side portions 111 extending in the axial direction (the Z direction), and a pair of small-width short side portions 112 (an upper short side portion 112a, a lower short side portion 112b) perpendicular to the long side portions 111. The extruded can 11 is formed by extrusion molding of, for example, aluminum material (including aluminum alloy material). The lid 12 is formed by a plate of aluminum material (including aluminum alloy material). The end portions 11T of the extruded can 11 and the lids 12 are joined in a watertight manner by laser welding, or the like. Current collector terminals 3 (a positive current collector terminal 3a, a negative current collector terminal 3b) connected to tab portions 2T formed at the opposite ends in the longitudinal direction (the Z direction) of the electrode body 2 are fixed via insulating materials 4 to the right and left lids 12.

The short side portions 112 include an upper short side portion 112a located upward and a lower short side portion 112b located downward, and the thickness d2 of the lower short side portion 112b is larger than the thickness d1 of the upper short side portion 112a. Therefore, even when the upper short side portion 112a with the smaller thickness d1 deforms due to a rise in the pressure inside the battery can 1 or an increase in the volume of the electrode body 2, the lower short side portion 112b with the larger thickness d2 is less likely to deform. In the upper short side portion 112a with the smaller thickness d1 are formed a safety valve 113 that opens and releases gas when the pressure inside the battery can 1 rises to a predetermined value or higher, and an inlet 114 through which electrolyte is injected into the battery can 1.

With the above arrangement, even when the pressure inside the battery can 1 rises due to a rise in the temperature of the battery cell 10 during rapid charging of the battery cell 10, for example, or when the electrode body 2 expands in volume as the battery cell 10 ages and deteriorates, heat can be dissipated to a cooling plate, or the like, through the lower short side portion 112b that is less likely to deform, and the battery cell 10 can be effectively cooled. Thus, it is possible to provide the battery cell 10 that can suppress deterioration of the cooling performance with a simple structure.

In the battery cell 10, it is preferable that grooves 116, which are recessed inward in the width direction while leaving flange portions 115 below, are formed along the axial direction (the Z direction), at opposite ends in the width direction (the X direction) of the lower short side portion 112b. In this case, the grooves 116 recessed inward in the width direction increase the surface area of the outer surface of the lower short side portion 112b. Therefore, the capability of dissipating heat from the lower short side portion 112b is further improved. Although the groove 116 is formed with an angular U-shaped cross section, it is not necessarily limited to this shape and may be formed with, for example, a U-shaped or V-shaped cross section.

Since the flange portions 115 are formed below the grooves 116 in the lower short side portion 112b, the lower short side portion 112b, which is restrained via the flange portions 115 as described below, is made even less likely to deform. As a result, when the pressure inside the battery can 1 rises due to a rise in the temperature of the battery cell 10 during rapid charging of the battery cell 10, for example, or when the electrode body 2 expands in volume as the battery cell 10 ages and deteriorates, heat can be dissipated to a cooling plate, or the like, through the lower short side portion 112b that is even less likely to deform, and the battery cell 10 can be more effectively cooled.

### Detailed Description of Battery Pack

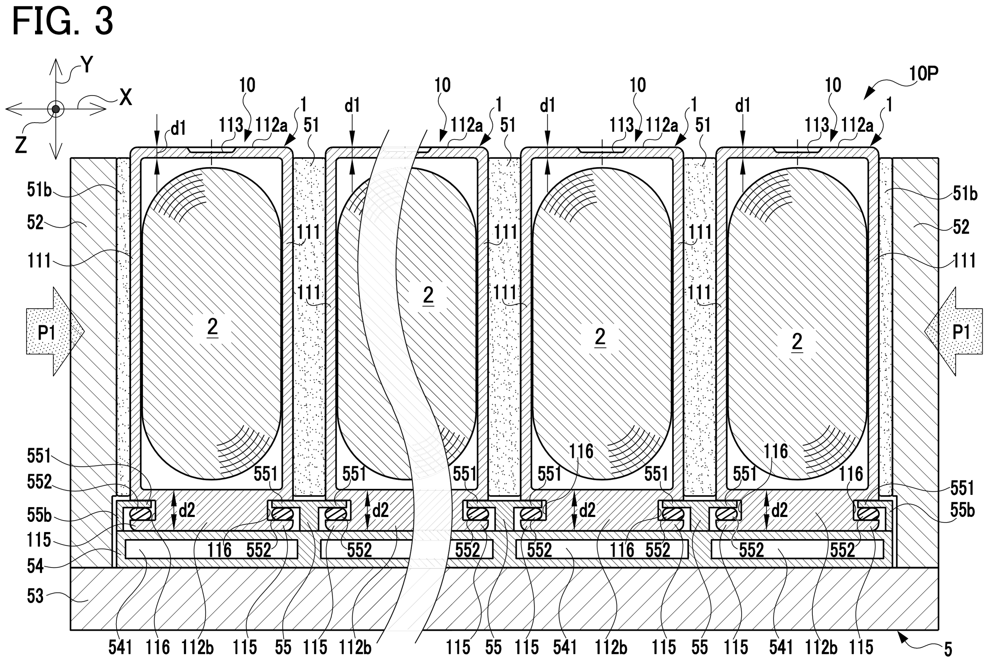

Next, a battery pack according to another embodiment of the disclosure will be described in detail with reference to the drawings. FIG. 3 is a schematic cross-sectional view of the battery pack formed by assembling a plurality of the battery cells shown in FIG. 1.

As shown in FIG. 3, the battery pack 10P includes the above-described battery cells 10 stacked with intervening members 51 interposed between the long side portions 111, and a restraint mechanism 5 that applies pressure to the outermost battery cells 10 inward in the stacking direction (the X direction) to hold the battery cells 10 in place.

The intervening members 51 are elastically deformable, insulating platelike members that serve to prevent the restraining load P1 from excessively increasing when the electrode bodies 2 expand in volume. For example, ethylene propylene rubber (EPDM), or the like, may be used for the intervening members 51. The restraint mechanism 5 includes a pair of side pressure plates 52 that press the long side portions 111 of the outermost battery cells 10 via the intervening members 51b interposed therebetween, a base 53 that supports the lower end portions of the side pressure plates 52, and a connecting plate (not shown) that connects the right and left side pressure plates 52. The battery cells 10 held in place by the restraint mechanism 5 are electrically connected via bus bars (not shown) at the respective current collector terminals 3 (the positive current collector terminals 3a, the negative current collector terminals 3b).

The restraint mechanism 5 also includes a cooling portion 54 that cools the battery cells 10, and pressing portions 55, 55b that press the lower short side portions 112b against the cooling portion 54 via the flange portions 115. The cooling portion 54 is fixed to the base 53, and a coolant flow path 541 having substantially the same width as the battery cell 10 is formed along the axial direction (the Z direction) at a position opposed to each battery cell 10.

Between the adjacent battery cells 10, the pressing portion 55 that has a retaining flange 551 formed in a T-shape and presses the corresponding flange portions 115 via elastic bodies 552 is fixed to the cooling portion 54. Between the outermost battery cell 10 and the side pressure plate 52, the pressing portion 55b that has a retaining flange 551 formed in a L-shape and presses the corresponding flange portion 115 via an elastic body 552 is fixed to the cooling portion 54. Although the pressing portions 55, 55b press the flange portions 115 via the elastic bodies 552 in this embodiment, they may directly press the flange portions 115. Gaps exist between the flange portions 115 and the pressing portions 55, 55b, thereby maintaining a certain degree of freedom in movement of the battery cells 10 held in place by the restraint mechanism 5.

In this case, even when the pressures inside the battery cans 1 rise due to a rise in the temperature of the battery cells 10 during rapid charging of the battery pack 10P, for example, or the electrode bodies 2 expand in volume as the battery cells 10 that constitute the battery pack 10P age and deteriorate, heat dissipation can be achieved by holding the lower short side portions 112b in contact with the cooling portion 54 by means of the pressing portions 55, 55b, and the battery cells 10 that constitute the battery pack 10P can be more effectively cooled.

### Modified Examples

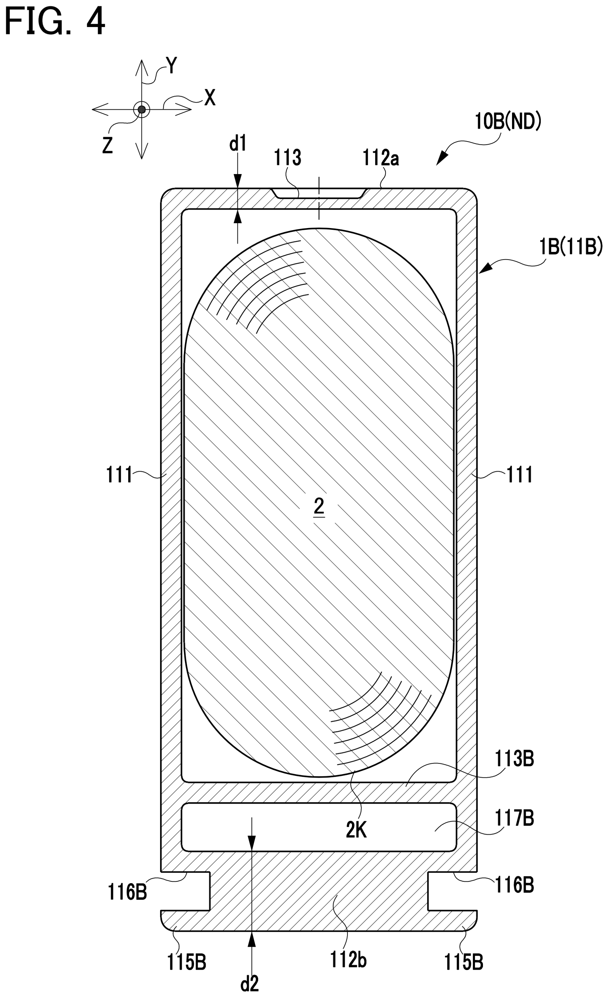

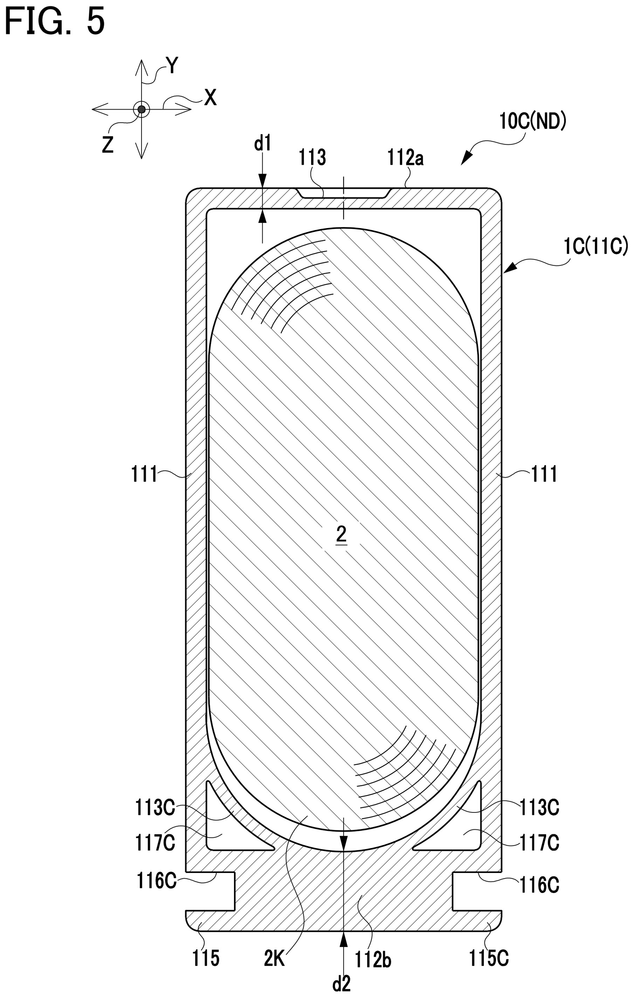

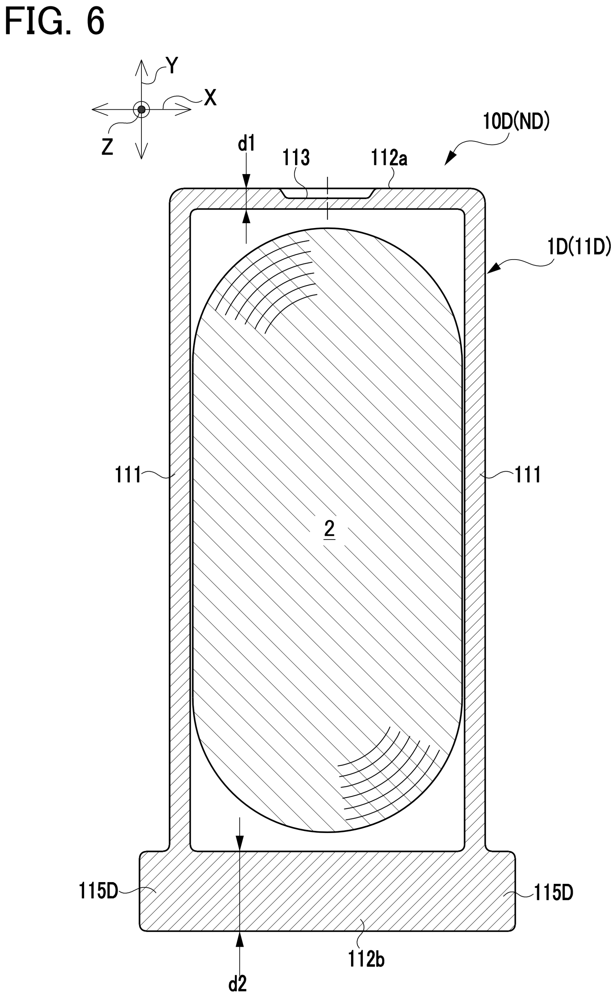

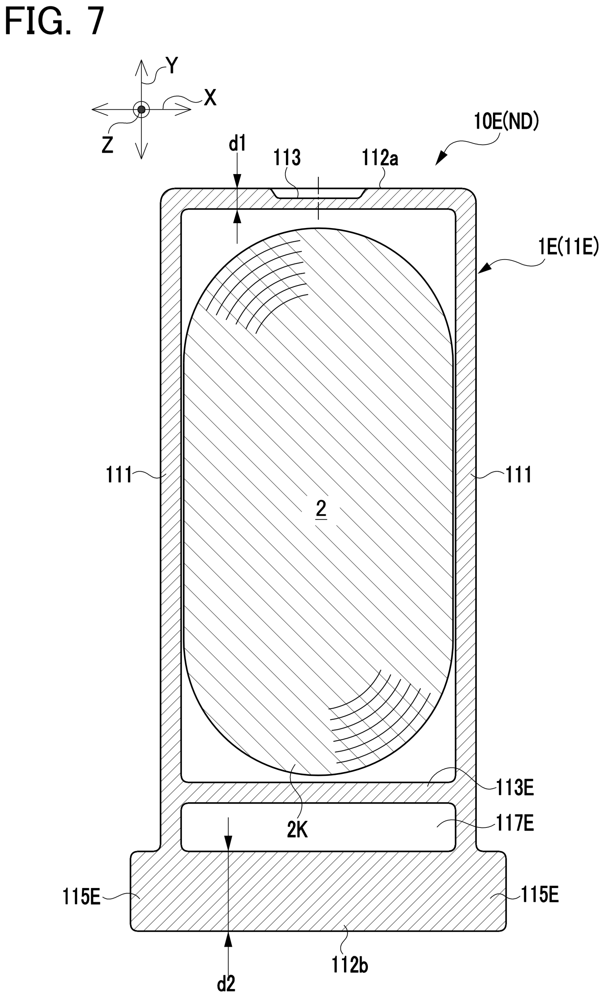

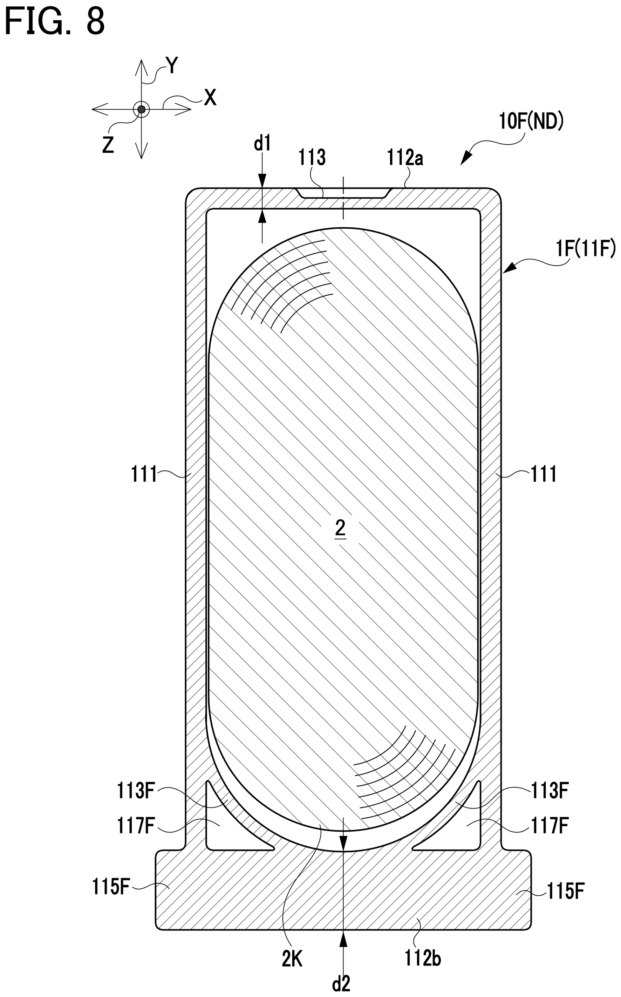

The embodiments described in detail above are merely illustrative examples and do not limit the disclosure in any way. Thus, the disclosure may be subject to various improvements and modifications without departing from its principle. FIG. 4 is a schematic A-A cross-sectional view of a first modified example of the battery cell shown in FIG. 1. FIG. 5 is a schematic A-A cross-sectional view of a second modified example of the battery cell shown in FIG. 1. FIG. 6 is a schematic A-A cross-sectional view of a third modified example of the battery cell shown in FIG. 1. FIG. 7 is a schematic A-A cross-sectional view of a fourth modified example of the battery cell shown in FIG. 1. FIG. 8 is a schematic A-A cross-sectional view of a fifth modified example of the battery cell shown in FIG. 1.

The battery cell 10 described above may be modified as shown in FIG. 4, FIG. 5, FIG. 7, and FIG. 8, for example, to provide battery cells 10B, 10C, 10E, 10F of the first, second, fourth and fifth modified examples in which extruded cans 11B, 11C, 11E, 11F respectively include partition wall portions 113B, 113C, 113E, 113F. Each of the partition wall portions 113B, 113C, 113E, 113F extends in the axial direction (the Z direction) between the lower short side portion 112b and the lower end portion 2K of the electrode body 2 to connect the long side portions 111 or the long side portions 111 and the lower short side portion 112b. In each of the battery cells 10B, 10C, 10E, 10F, a coolant flow path 117B, 117C, 117E, 117F is formed between the partition wall portion 113B, 113C, 113E, 113F, the long side portions 111, and the lower short side portion 112b.

In this case, the coolant that flows through the coolant flow path 117B, 117C, 117E, 117F formed between the partition wall portion 113B, 113C, 113E, 113F, the long side portions 111, and the lower short side portion 112b further improves the cooling performance of the battery cells 10B, 10C, 10E, 10F.

Consequently, even when the pressure inside the battery can 1B, 1C, 1E, 1F rises due to a rise in the temperature of the battery cell 10B, 10C, 10E, 10F during rapid charging of the battery cell 10B, 10C, 10E, 10F, for example, or when the electrode body 2 expands in volume as the battery cell 10B, 10C, 10E, 10F ages and deteriorates, heat can be dissipated to the cooling plate, or the like, via the lower short side portion 112b that is even less likely to deform, and heat can also be dissipated through the coolant flowing in the coolant flow path 117B, 117C, 117E, 117F, so that the battery cell 10B, 10C, 10E, 10F can be more effectively cooled.

The battery cells 10B, 10C, 10E, 10F of the first, second, fourth and fifth modified examples may be used for the battery pack 10P described above, and the battery cells 10B, 10C, 10E, 10F that constitute the battery pack 10P can be more effectively cooled.

The battery cell 10 described above may also be modified as shown in FIG. 6, FIG. 7, and FIG. 8, to provide battery cells 10D, 10E, 10F of the third, fourth, and fifth modified examples. In each of the battery cells 10D, 10E, 10F, flange portions 115D, 115E, 115F that protrude outward in the width direction are formed along the axial direction (the Z direction) at the opposite ends in the width direction (the X direction) of the lower short side portion 112b.

In this case, the flange portions 115D, 115E, 115F protruding outward in the width direction increase the surface area of the outer surface of the lower short side portion 112b. Therefore, the capability of dissipating heat from the lower short side portion 112b is further improved. In addition, the lower short side portion 112b is retained or held in place via the flange portions 115D, 115E, 115F, so that the deformation of the lower short side portion 112b can be further suppressed.

Consequently, even when the pressure inside the battery can 1D, 1E, 1F rises due to a rise in the temperature of the battery cell 10D, 10E, 10F during rapid charging of the battery cell 10D, 10E, 10F, for example, or when the electrode body 2 expands in volume as the battery cell 10D, 10E, 10F ages and deteriorates, heat can be dissipated to the cooling plate, or the like, via the lower short side portion 112b that is even less likely to deform, so that the battery cell 10D, 10E, 10F can be more effectively cooled.

The battery cells 10D, 10E, 10F of the third, fourth, and fifth modified examples may be used for the battery pack 10P described above, and the battery cells 10D, 10E, 10F that constitute the battery pack 10P can be more effectively cooled.

### Reference Signs List

- 1, 1B, 1C, 1D, 1E, 1F: Battery can
- 2: Electrode body
- 2K: Lower end portion
- 5: Restraint mechanism
- 10, 10B, 10C, 10D, 10E, 10F: Battery cell
- 10P: Battery pack
- 11, 11B, 11C, 11D, 11E, 11F: Extruded can
- 11T: End portion
- 12: Lid
- 51: Intervening member
- 54: Cooling portion
- 55, 55b: Pressing portion
- 111: Long side portion
- 112a: Upper short side portion
- 112b: Lower short side portion
- 113B, 113C, 113E, 113F: Partition wall portion
- 115, 115B, 115C: Flange portion
- 115D, 115E, 115F: Flange portion
- 116, 116B, 116C: Groove
- 117B, 117C, 117E, 117F: Coolant flow path
- ND: Secondary battery

## Claims

1. A battery cell (10, 10B, 10C, 10D, 10E, 10F) that forms a secondary battery (ND) and includes an electrode body (2), and a battery can (1, 1B, 1C, 1D, 1E, 1F) made of metal and having an extruded can (11, 11B, 11C, 11D, 11E, 11F) in the form of a quadrangular tube which contains the electrode body (2) and is open at opposite ends in an axial direction (Z), and lids (12) that seal the opposite ends of the extruded can (11, 11B, 11C, 11D, 11E, 11F),
**characterized in that**
the extruded can (11, 11B, 11C, 11D, 11E, 11F) includes a pair of long side portions (111) extending in the axial direction, and an upper short side portion (112a) and a lower short side portion (112b) perpendicular to the long side portions (111), and
the lower short side portion (112b) has a larger thickness than the upper short side portion (112a).

2. The battery cell (10, 10B, 10C, 10D, 10E, 10F) according to claim 1, wherein the lower short side portion (112b) has opposite end portions in a width direction (X) in which grooves (116, 116B, 116C) are formed along the axial direction (Z), the grooves (116, 116B, 116C) being recessed inward in the width direction (X) while leaving flange portions (115, 115B, 115C) below.

3. The battery cell (10, 10B, 10C, 10D, 10E, 10F) according to claim 1, wherein the lower short side portion (112b) has opposite end portions in a width direction (X) in which flange portions (115D, 115E, 115F) that protrude outward in the width direction are formed along the axial direction (Z).

4. The battery cell (10, 10B, 10C, 10D, 10E, 10F) according to any one of claims 1 to 3, wherein:
the extruded can (11, 11B, 11C, 11D, 11E, 11F) includes a partition wall portion (113B, 113C, 113E, 113F) that extends in the axial direction between the lower short side portion (112b) and a lower end portion (2K) of the electrode body (2), to connect the long side portions (111) or the long side portion (111) and the lower short side portion (112b); and
the extruded can (11, 11B, 11C, 11D, 11E, 11F) has a coolant flow path (117B, 117C, 117E, 117F) formed between the partition wall portion (113B, 113C, 113E, 113F) and the long side portions (111) and the lower short side portion (112b).

5. A battery pack (10P) comprising:
a plurality of the battery cells (10, 10B, 10C, 10D, 10E, 10F) as set forth in claim 2 or 3, which are stacked with intervening members (51) interposed between the long side portions (111); and
a restraint mechanism (5) that applies pressure to the outermost ones of the battery cells inward in a stacking direction to hold the battery cells (10, 10B, 10C, 10D, 10E, 10F) in place, the restraint mechanism (5) including a cooling portion (54) that cools the battery cells (10, 10B, 10C, 10D, 10E, 10F), and a pressing portion (55, 55b) that presses the lower short side portions (112b) against the cooling portion (54) via the flange portions (115).
